# EUROPEAN PATENT APPLICATION

(11) **EP 3 112 264 A1**
(43) Date of publication of application: **04.01.2017**
(21) Application number: 16176000.4
(22) Date of filing: 23.06.2016
(51) Int. Cl.: B64C 25/40

(54) **ROLLER-BASED ELECTRIC WHEEL DRIVE SYSTEM**

(30) Priority: 02.07.2015 US 201562188085 P; 19.08.2015 US 201514829982
(71) Applicant: Honeywell International Inc., Morris Plains, NJ 07950 (US)
(72) Inventor: CHRISTENSEN, Donald Jeffrey, Morris Plains, NJ 07950 (US); MITCHELL, Robert, Morris Plains, NJ 07950 (US)
(74) Representative: Houghton, Mark Phillip

(57) **Abstract**

An electric taxi system (ETS) (100) for an aircraft includes rollers (119) attached circumferentially to a wheel (111) of the aircraft, and a sprocket (113) with circumferentially distributed teeth (115) attached to a sprocket-tooth ring (116). The sprocket has a hub (114) with an axis of rotation (150) that is parallel to an axis of rotation (152) of the wheel of the aircraft. The sprocket includes a flexible member (124) interposed between the hub and the sprocket-tooth ring. A radial axis (158) of at least one tooth of the sprocket is substantially perpendicular with an axis of rotation (154) of at least one of the rollers even if the at least one of the rollers is non-parallel to the axis of rotation of the wheel of the aircraft.

## Description

### RELATED APPLICTIONS

This application claims the benefit of US Provisional Patent Application No. 62/188,085, filed July 2, 2015.

### BACKGROUND OF THE INVENTION

The present invention generally relates to drive systems that transmit power through roller and sprockets and, more particularly, the present invention relates to employment of such drive systems for transmitting torque to wheels of an aircraft.

In an aircraft electric taxi system (ETS), for example, it is desirable to construct the ETS with compact and lightweight components which may be retrofitted onto existing aircraft and which may perform reliably even when exposed to varying environmental conditions that may be encountered by the aircraft at various airports. To meet these conditions, some ETS drive systems employ a roller and sprocket arrangement in which torque is delivered to the wheel though a driven sprocket.

Some design challenges exist when such roller and sprocket systems are employed. For example, the wheel rims of many commercial aircraft are designed to allow a limited amount of deflection during taxiing and turning of the aircraft. During taxiing, the load of the aircraft may cause the wheel to ovalize on each revolution. Moreover, the loads exerted on the wheel may cause deflections of the wheel rim with respect to the axle. Weight on an axle during a turn may cause flexure of the wheel rim radially or axially from a driving sprocket. Under these conditions, alignment between a sprocket and rollers may vary with wheel deflection.

As can be seen, there is a need for a roller-based drive system that will deliver power even when alignment between a driving element and a driven element may vary. More particularly there is a need for such a system which may be incorporated on an aircraft ETS.

### SUMMARY OF THE INVENTION

In one aspect of the present invention, an electric taxi system (ETS) for an aircraft comprises: :rollers attached circumferentially to a wheel of the aircraft, and a sprocket with circumferentially distributed teeth attached to a sprocket-tooth ring; wherein the sprocket has a hub with an axis of rotation that is parallel to an axis of rotation .of the wheel of the aircraft; wherein the sprocket includes a flexible member interposed between the hub and the sprocket-tooth ring; and wherein a radial axis of at least one tooth of the sprocket is substantially perpendicular with an axis of rotation of at least one of the rollers even if the at least one of the rollers is non-parallel to the axis of rotation of the wheel of the aircraft..

In another aspect of the present invention a sprocket comprises: a hub; a sprocket-tooth ring; and a flexible member interposed between the hub and the sprocket-tooth ring.

In still another aspect of the present invention, a roller gear comprises: a hub; a roller-support ring surrounding the hub; and a plurality of rollers engaged with and distributed circumferentially around the roller-support ring; wherein at least a segment of an outer surface of the hub has a convex curvature wherein at least a segment of an inner surface of the roller-support ring has a concave curvature; and wherein the at least a portion of the outer surface of the hub is rotatably engaged with the at least a portion of the inner surface of the roller-support ring.

These and other features, aspects and advantages of the present invention will become better understood with reference to the following drawings, description and claims.

### BRIEF DESCRIPTION OF THE DRAWINGS

Figure 1 is a perspective view of an electric taxi system (ETS) in accordance with an exemplary embodiment of the invention;
Figure 2 is perspective view of a self-aligning sprocket in accordance with an exemplary embodiment of the invention;
Figure 3 is a cross-sectional view of the sprocket of Figure 2 taken along the lines 3-3 in accordance with an exemplary embodiment of the invention;
Figure 4 is a perspective view of a flexible subassembly of the sprocket of figure 2 in accordance with an exemplary embodiment of the invention;
Figure 5 is cross-sectional view of the subassembly of Figure 4 taken along the lines 5-5 in accordance with an exemplary embodiment of the invention;
Figure 6A is a schematic diagram illustrating an operational feature of the ETS of Figure 1 in accordance with an exemplary embodiment of the invention;
Figure 6B is a schematic diagram illustrating an operational feature of the sprocket of Figure 2 in accordance with an exemplary embodiment of the invention;
Figure 7 is a perspective view of an electric taxi system (ETS) in accordance with a second exemplary embodiment of the invention;;
Figure 8 is a perspective view of a roller gear in accordance with an exemplary embodiment of the invention;
Figure 9 is a cross-sectional view of the roller gear of Figure 8, taken along the lines 9-9 in accordance with an exemplary embodiment of the invention;
Figure 9A is a detailed view of a first portion of the roller gear of Figure 8 in accordance with an exemplary embodiment of the invention;
Figure 9B is a detailed view of a second portion of the roller gear of Figure 8 in accordance with an exemplary embodiment of the invention;
Figure 9C is a detailed view of a third portion of the roller gear of Figure 8 in accordance with an exemplary embodiment of the invention;
Figure 10 is a cross-sectional view of the roller gear of Figure 8 taken along the lines 10-10 in accordance with an exemplary embodiment of the invention;
Figure 10A is a detailed view of a fourth portion of the roller gear of Figure 8 in accordance with an exemplary embodiment of the invention; and
Figure 10B is a detailed view of a fifth portion of the roller gear of Figure 8 in accordance with an exemplary embodiment of the invention;

### DETAILED DESCRIPTION OF THE INVENTION

The following detailed description is of the best currently contemplated modes of carrying out the invention. The description is not to be taken in a limiting sense, but is made merely for the purpose of illustrating the general principles of the invention, since the scope of the invention is best defined by the appended claims.

Various inventive features are described below that can each be used independently of one another or in combination with other features.

Broadly, embodiments of the present invention generally provide a roller-based drive system that can deliver power even when alignment between a driving element and a driven element may vary. Aspects of the subject technology may be useful in aircraft landing gear systems during taxiing of the aircraft

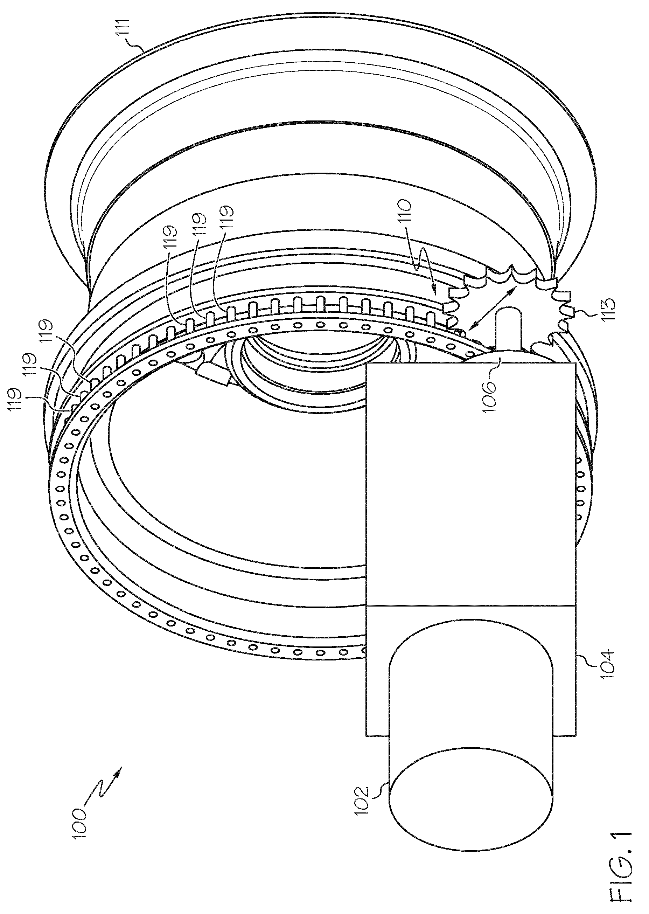

Referring now to Figure 1, an exemplary embodiment of a roller-based drive system 110 is shown schematically as part of an aircraft electric taxi system (ETS) 100. The ETS 100 may include a source of motive power such as an electric motor 102. A gearbox 104 may be coupled to the motor 102. The drive system 110 may include a driver such as a self-aligning sprocket 113 engaged with driven elements such as rollers 119 coupled to a wheel 111 of an aircraft (not shown).

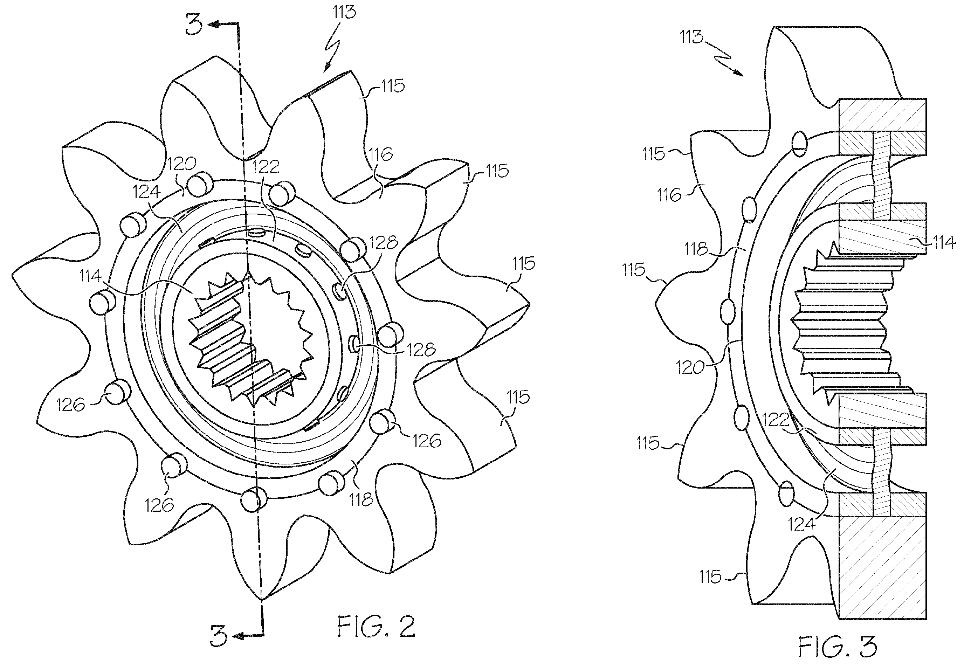

Referring now to Figures 2 and 3, the self-aligning sprocket 113 is shown in detail. In an exemplary embodiment, the sprocket 113 may comprise a hub 114 and a sprocket-tooth ring 116 with circumferentially distributed teeth 115. A flexible subassembly 118 may be interposed between the hub 114 and the sprocket-tooth ring 116. The flexible subassembly 118 may include an outer ring 120, an inner ring 122 and a flexible member 124 interposed between the outer ring 120 and the inner ring 122. The outer ring 120 may be secured to the sprocket-tooth ring 116 with longitudinally oriented pins 126. The inner ring 122 may be secured to the hub 114 with radially oriented pins 128.

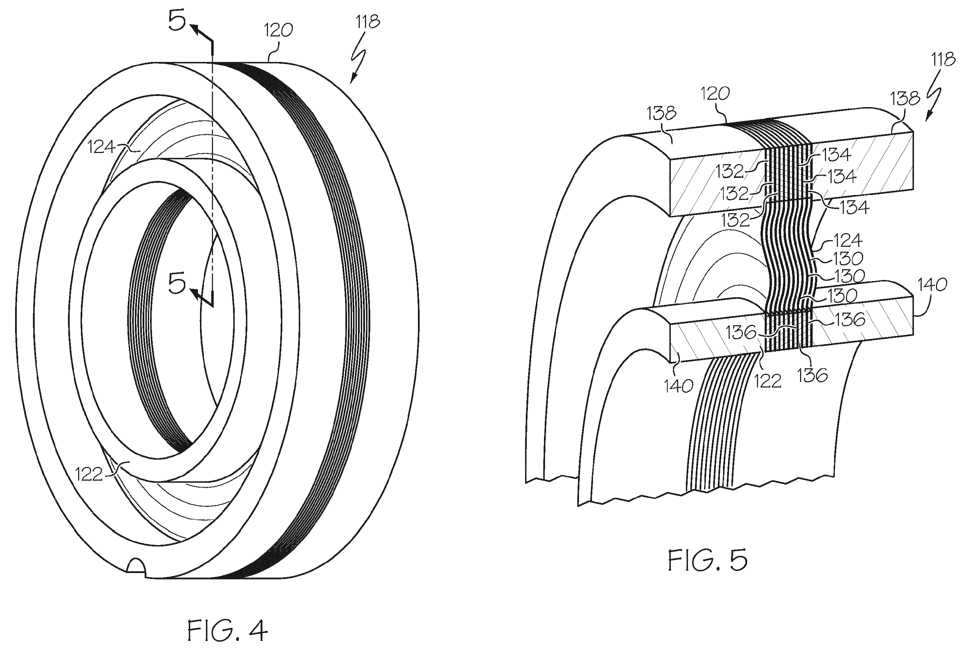

Referring now to Figures 4 and 5, the flexible subassembly 118 is shown in detail. The outer ring 120 and the inner ring 122 may be interconnected with the flexible member 124. In an exemplary embodiment, the flexible member 124 may be constructed from a plurality of undulated annular metallic discs 130 spaced apart from one another with spacers 132. Some of the spacers 132 and outer portions 134 of the discs 130 may be metallurgically bonded together to form a substantially homogeneous metallic structure. Similarly, some of the spacers 132 may be metallurgically bonded together with inner portions 136 of the discs 130. An advantageous consequence of such metallurgical bonding is that all of the undulated discs 130 of the flexible member 124 may transmit a substantially equal portion of torque load from the hub 114 to the sprocket-tooth ring 116. Moreover, any one of annular discs 130 may undergo flexing while its outer portion 134 and inner portion 136 do not experience fretting or other wear-inducing relative motion relative to the inner and outer portions of another one of the annular discs 130..

The outer ring 120 may be formed from two segments 138 with the outer portion 134 of the flexible member 124 interposed and metallurgically bonded between the segments 138. Similarly, the inner ring 122 may be formed from two segments 140 with the inner portion 136 of the flexible member 124 interposed between the segments 140. The segments 138 and 140 may be of substantially equal length. Thus, the flexible member 124 may be positioned about midway along a longitudinal length of the sprocket 113.

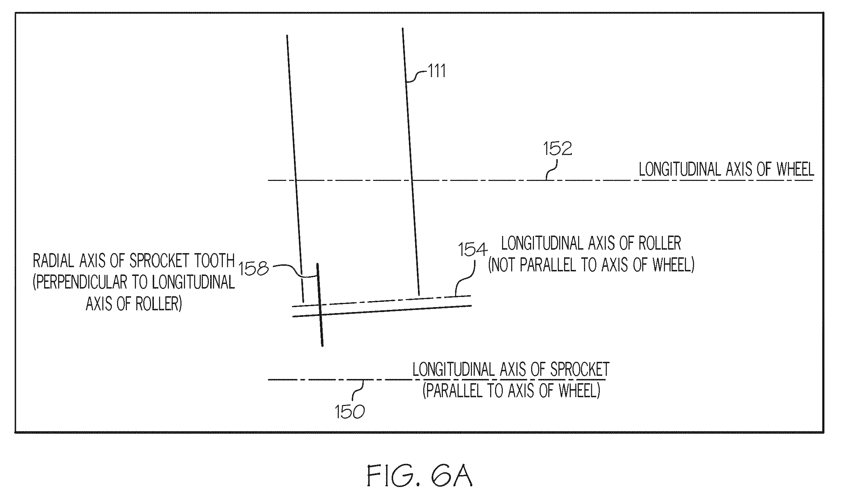

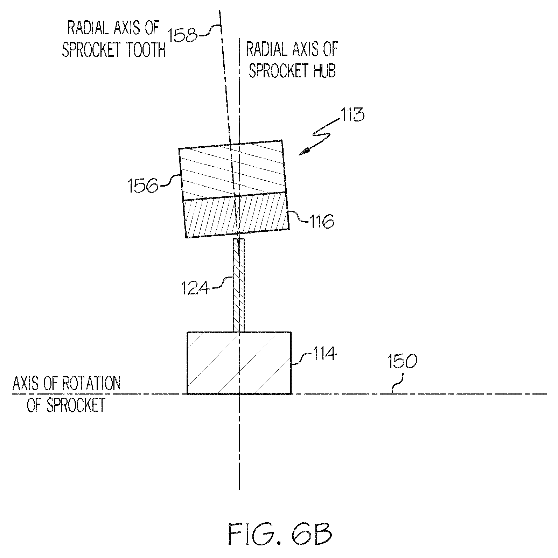

Referring now to Figures 6A and 6B, schematic diagrams illustrate how the self-aligning sprocket 113 may be advantageously employed to drive the wheel 111 of the aircraft (See Figure 1). A longitudinal axis or axis of rotation 150 of the sprocket 113 may be oriented parallel to a longitudinal axis or axis of rotation 152 of the wheel 111. During taxiing, the load of the aircraft may cause the wheel 111 to ovalize on each revolution. Moreover, loads exerted on the wheel 111 may cause deflections of the wheel 111 with respect to its longitudinal axis of rotation 152. Weight on an axle of the aircraft (not shown) during a turn may cause flexure of the wheel 111 radially or axially relative to the axis of rotation 150 of the sprocket 113. Under these conditions, alignment between the sprocket 113 and the roller 119 may vary. In other words, a longitudinal axis or axis of rotation 154 of one of the rollers 119 may become non-parallel to the axis of rotation 152 of the wheel 111 and non-parallel to the axis of rotation 150 of the sprocket 113. However, the flexible member 124 may bend so the outer ring 120 of the flexible subassembly 118 may deflect relative to the inner ring 122 of the subassembly 118. As a consequence of such deflection, a sprocket tooth 156 that is engaged with the non-parallel roller 119 may become properly aligned with the roller 119. In that regard, a radial axis 158 of the tooth 156 may be positioned so that the radial axis 158 is perpendicular to the axis of rotation 154 of the roller 119.

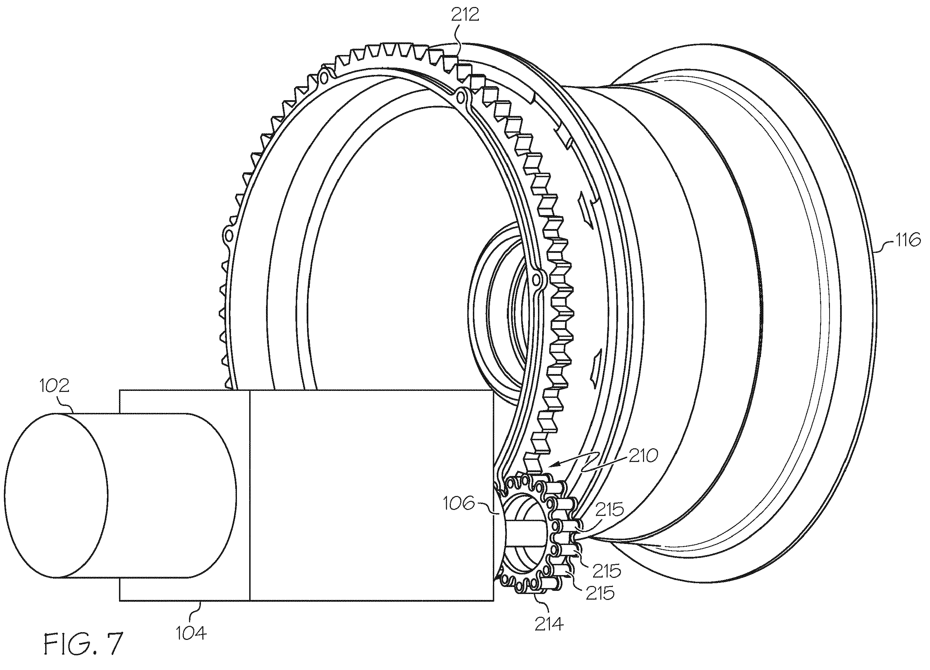

Referring now to Figure 7, a second exemplary embodiment of a drive system 210 may differ from the drive system 110 of Figure 1 in that the drive system 210 may include a circumferentially mounted sprocket 212 driven by a self-aligning roller gear 214.

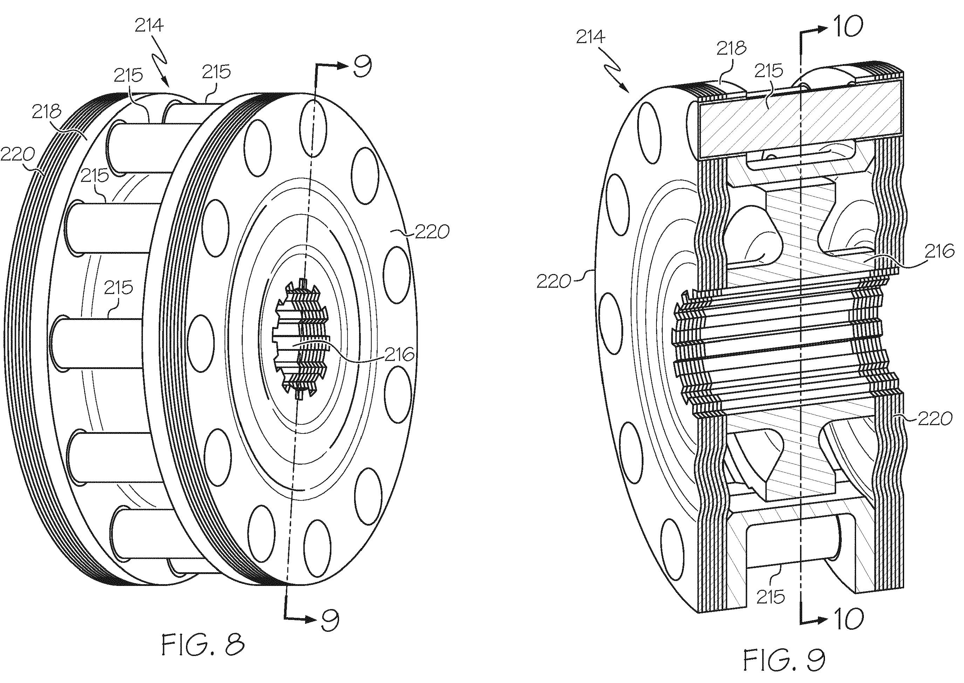

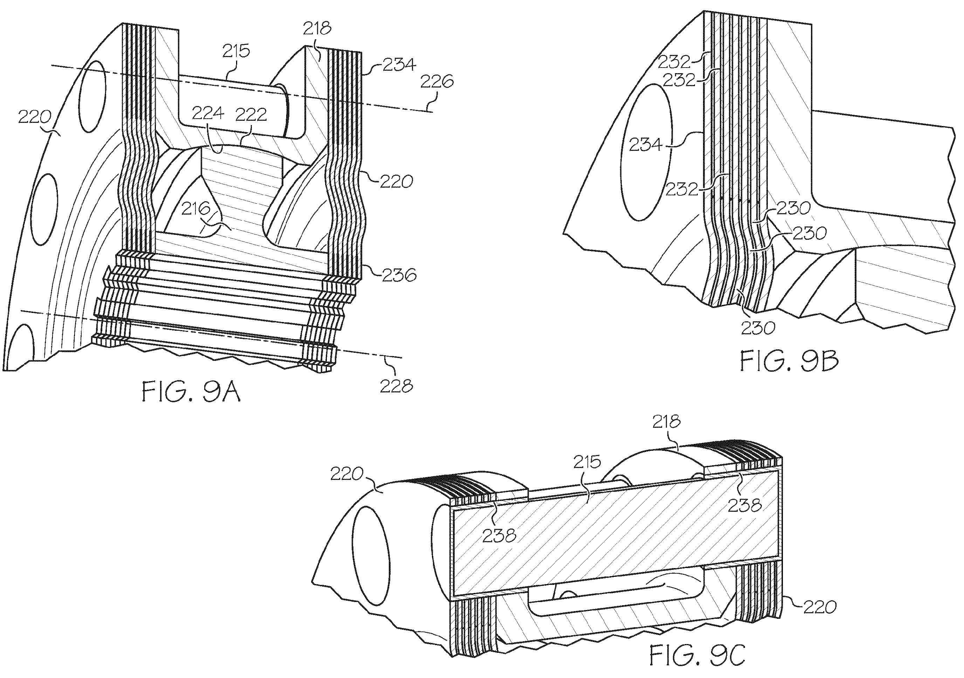

Referring now to Figures 8 and 9, an exemplary embodiment of the self-aligning roller gear 214 is shown. The roller gear 214 may comprise rollers 215, a splined hub 216 a roller-support ring 218 and flexible members 220 interconnecting the hub 216 and the roller-support ring 218.

Referring more particularly to Figures 9A, 9B and 9C, various features of the roller gear 214 are shown in detail. In Figure 9A, it may be seen that the hub 216 may be provided with a curved outer surface segments 222. The roller support ring 218 may be provided with curved inner surface segments 224. The outer surface segments 222 may be convex and may be shaped like an outer surface of a segment of a sphere. The inner surface segments 224 may be concave and may be shaped like an inner surface of a segment of a hollow sphere. The inner surface segments 222 and the outer surface segments 224 may be slidably engaged with one another so that the roller-support ring 218 may be free to move rotatably relative to the hub 216. As a consequence of such rotational displacement between the roller-support ring 218 and the hub 216, an axis of rotation 226 of the roller.215 may become non-parallel to an axis of rotation 228 of the roller gear 214.

In Figure 9B it may seen that, in an exemplary embodiment, the flexible member 220 may be constructed from a plurality of undulated annular metallic discs 230 spaced apart from one another with spacers 232. Spacers 232 and outer portions 234 of the discs 230 may be metallurgically bonded together to form a substantially homogeneous metallic structure. Similarly, spacers 232 may be metallurgically bonded together with inner portions 236 of the discs 230. The bonded outer portions 234 and spacers 232 may be metallurgically bonded to the roller-support ring 218. One of the flexible members 220 may be bonded at each axial end of the roller-support ring 218. Thus the outer portion 234, the spacers 232 and the roller-support ring may become a homogeneous metallic structure which may be readily machined for insertion of bushings 238 as shown in Figure 9C.

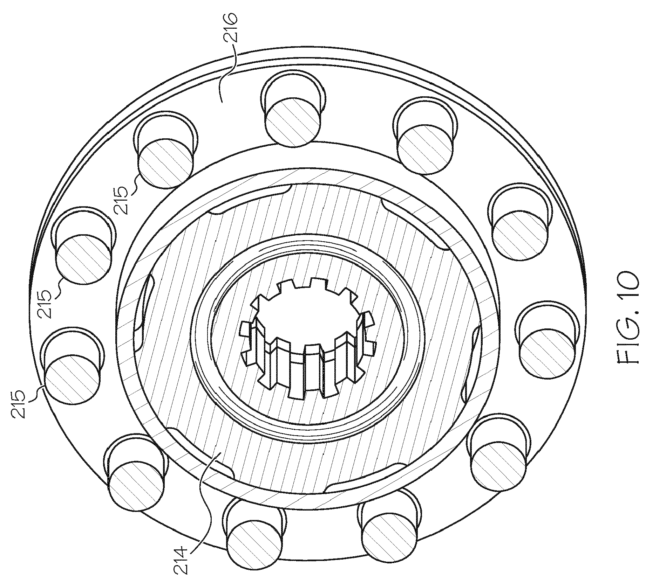

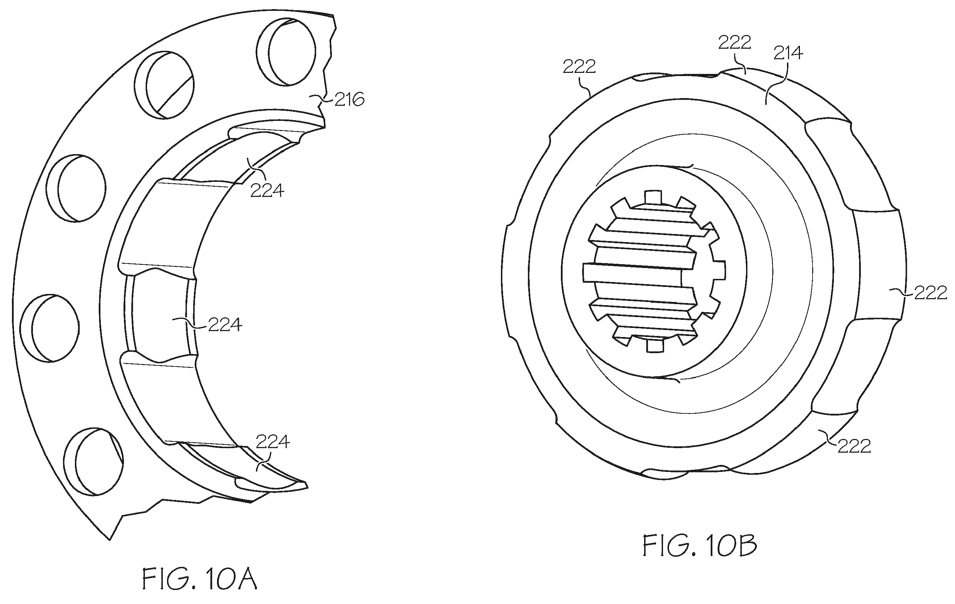

Referring now to Figures 10, 10A and 10B, there is shown an exemplary embodiment of a system for engaging the hub 216 with the roller-support ring 218. The inner surface segments 224 may be circumferentially spaced apart from one another by a distance that exceeds a circumferential length of one of the outer surface segments 222 of the hub 216. During assembly, the hub 216 may be rotationally aligned with the roller-support ring 218 so that the outer surface segments 222 may pass between the inner surface segment 224. After the hub 216 is in position within the roller-support ring 218, the hub 216 may be rotated to bring the outer surface segments 222 into engagement with the inner surface segments 224.

Referring back to Figures 9A and 9C, it may be seen that chambers 242 may be formed between the flexible members 220, the hub 216 and the roller-support ring 218. In an exemplary embodiment, the chambers 242 may be employed as repositories for lubricants that may be used to lubricate the bushings 238.

It should be understood, of course, that the foregoing relates to exemplary embodiments of the invention and that modifications may be made without departing from the spirit and scope of the invention as set forth in the following claims.

## Claims

1. An electric taxi system (ETS) (100) for an aircraft comprising:
rollers (119) attached circumferentially to a wheel (111) of the aircraft, and
a sprocket (113) with circumferentially distributed teeth (115) attached to a sprocket-tooth ring (116);
wherein the sprocket (113) has a hub (114) with an axis of rotation (150) that is parallel to an axis of rotation (152) .of the wheel (111) of the aircraft;
wherein the sprocket (113) includes a flexible member (124) interposed between the hub (114) and the sprocket-tooth ring (116); and
wherein a radial axis (158) of at least one tooth (115) of the sprocket (113) is substantially perpendicular with an axis of rotation (154) of at least one of the rollers (119) even if the at least one of the rollers (119) is non-parallel to the axis of rotation (152) of the wheel (111) of the aircraft..

2. The ETS of claim 1
wherein the flexible member (124) comprises a plurality of annular discs (130);
wherein first spacers (132) are interposed between outer portions (134) of the annular discs (130);
wherein second spacers (132) are interposed between inner portions (136) of the annular discs (130);
wherein the first spacers (132) and the outer portions (134) of the annular discs (130) are metallurgically bonded together; and
wherein the second spacers (132) and the inner portions (136) of the annular discs (130) are metallurgically bonded together.

3. The ETS of claim 2 wherein the annular discs (130) have an undulating cross-sectional configuration.

4. The ETS of claim 1 wherein the sprocket (113) comprises:
a flexible subassembly (118) that includes;
an outer ring (120),
an inner ring (122),. and
the flexible member (124), the flexible member (124) being interposed between the outer ring (120)and the inner ring (122);
wherein the flexible subassembly (118) is interposed between the hub (114) and a sprocket-tooth ring (116);:
wherein the hub (114) and the sprocket-tooth ring (116) are constructed with a first hardness; and
wherein the flexible subassembly (118) is constructed with a second hardness, which second hardness is lower than the first hardness.

5. The ETS of claim 1 wherein the flexible member (124) is positioned at about the center of an axial length of the sprocket (113).
